(19) Europäisches Patentamt

European Patent Office

Office européen des brevets

(11) Veröffentlichungsnummer: **0 208 095**
**B1**

(12) **EUROPÄISCHE PATENTSCHRIFT**

(45) Veröffentlichungstag der Patentschrift: **14.03.90**

(21) Anmeldenummer: **86106747.8**

(22) Anmeldetag: **16.05.86**

(51) Int. Cl.⁵: **B 63 B 35/79**, B 63 H 9/08

(54) **Vorrichtung zum Befestigen eines Gabelbaums an dem Mast eines Segelbretts.**

(30) Priorität: **06.07.85 DE 3524256**

(43) Veröffentlichungstag der Anmeldung:
**14.01.87 Patentblatt 87/03**

(45) Bekanntmachung des Hinweises auf die
Patenterteilung:
**14.03.90 Patentblatt 90/11**

(84) Benannte Vertragsstaaten:
**AT FR GB IT NL SE**

(56) Entgegenhaltungen:
**DE-A-3 407 825**
**DE-U-8 111 526**
**DE-U-8 504 545**
**FR-A-1 192 700**
**FR-A-2 399 353**
**US-A-4 424 759**
**US-A-4 430 017**

(73) Patentinhaber: **Marker, Hannes**
**Alpspitzstrasse 37**
**D-8100 Garmisch-Partenkirchen (DE)**

(72) Erfinder: **Marker, Hannes**
**Alpspitzstrasse 37**
**D-8100 Garmisch-Partenkirchen (DE)**
Erfinder: **Hüss, Otto**
**Hausnummer 139**
**D-8101 Wallgau (DE)**
Erfinder: **Janich, Karl**
**Sonnengasse 14**
**D-8011 Forstinning (DE)**

Courier Press, Leamington Spa, England.

EP 0 208 095 B1

**Beschreibung**

Die Erfindung betrifft eine Manschette zum Befestigen eines Gabelbaums an einem Mast eines Segelbretts, wobei die Manschette auf den Mast aufschiebbar und mittels eines Klemmelementes festlegbar ist.

Bei einer derartigen aus der DE—U 81 11 526 bekannten Manschette entspricht deren Innendurchmesser dem Außendurchmesser des Mastes. Der obere Teil der Manschette besitzt einen größeren Außendurchmesser als der untere Teil, wobei zwischen beiden Teilen ein kegelstumpfförmiger Übergangsteil liegt. Der untere Teil besitzt ein Außengewinde für eine als Klemmelement dienende Ringschraube, die oberhalb ihres Gewindes sich kegelstumpfförmig erweitert und mit dieser Erweiterung am kegelstumpfförmigen Übergangsteil anliegt. Der untere und der Übergangsteil der Manschette sind längsgeschlitzt, so daß beim Aufschrauben der Schraube diese mit ihrem kegelstumpfförmigen Teil den Übergangsteil und den unteren Teil der Manschette zusammendrückt und damit diese Teile gegen den Mast preßt, so daß die Manschette auf dem Mast nicht mehr verschoben werden kann.

Bei dieser Konstruktion wird es einmal als nachteilig empfunden, daß sie nicht alle Mastdurchmesser in deren üblichen Toleranzbereich erfassen kann, und zum anderen, daß sowohl zum Erreichen als auch zum Lösen der Klemmverbindung eine relativ große Ringschraube zu betätigen ist.

Aufgabe der Erfindung ist es darum, eine gattungsgemäße Manschette zu schaffen, die sich einfach und schnell auf dem Mast befestigen und umgekehrt von diesem wieder lösen läßt.

Erfindungsgemäß wird diese Aufgabe dadurch gelöst, daß die Manschette einen Innendurchmesser aufweist, der größer als der Außendurchmesser des Mastes ist, daß das Klemmelement keilförmig ausgebildet und in dem Ringraum zwischen der Manschette und dem Mast verschiebbar gehalten ist und daß zum Verschieben des Klemmelementes eine Spanneinrichtung vorgesehen ist.

Das keilförmige Klemmelement kann in axialer Richtung zum Mast verschiebbar sein. Es können auch zwei an einander gegenüberliegenden Seiten des Mastes angreifende Klemmkeile vorgesehen sein. Zweckmäßigerweise ist auch die Innenwandung der Manschette gegensinnig zu den Klemmkeilen abgeschrägt. Die Klemmkeile können in Nuten der Innenwandung der Manschette geführt sein. Weiterhin können die Klemmkeile auf ihrer dem Mast zugewandten Seite zylinderschalenförmige Klemmbacken tragen.

In weiterer Ausgestaltung der Erfindung ist vorgesehen, daß das Klemmelement aus einem Ring mit keilförmigem Außenmantel besteht.

Die Manschette und auch das ringförmige Klemmelement können jeweils mit einer Aussparung versehen sein, so daß die Manschette über die Masttasche an dem Mast angreifen kann.

Die Spanneinrichtung kann aus einem zweiarmigen Hebel, einem Kniehebel oder auch aus einem Exzenter bestehen.

Mit dem Spannhebel kann in weiterer Ausgestaltung der Erfindung ein entgegen der Spannrichtung gegen den Mast schwenkbarer Verlängerungshebel begrenzt schwenkbar verbunden sein, an dessen freiem Ende die Startschot befestigt ist. Dieser den Spannhebel verlängernde Hebel bildet gleichsam ein Gabelbaumzugteil, das das Herausziehen des Mastes aus dem Wasser erleichtert.

Nach einer anderen Ausgestaltung der Erfindung ist vorgeseh, daß in dem Ringraum in Umfangsrichtung verschiebliche gekrümmte Klemmkeile gehaltert sind. Befinden sich diese Klemmkeile beidseits der durch das gespannte Segel definierten Mittelebene, wird die Klemmkraft durch den Zug auf den Gabelbaum erhöht. Die Klemmkeile können in Nuten der Manschette geführt sein. Weiter können die Klemmkeile in Klemmrichtung federbelastet sein. Zum Lösen der Verspannung können die Klemmkeile mit die Manschette durchsetzenden Nocken versehen sein.

Ausführungsbeispeile der Erfindung werden nachstehend anhand der Zeichnung näher erläutert. In dieser zeigt

Fig. 1 eine perspektivische Ansicht einer um den Mast legbaren Haltemanschette mit in dieser geführten Klemmkeilen, die durch einen Doppelgelenkhebel gegeneiander spannbar miteinander verbunden sind,

Fig. 2 eine perspektivische Ansicht einer Manschette mit ringförmigem Klemmelement,

Fig. 3 eine Manschette mit einem Spannhebel und einem schwenkbar mit diesem verbundenen Verlängerungshebel in Seitenansicht,

Fig. 4 eine Draufsicht auf eine Manschette mit Klemmkeilen und

Fig. 5 einen Horizontalschnitt durch die Manschette nach Fig. 4.

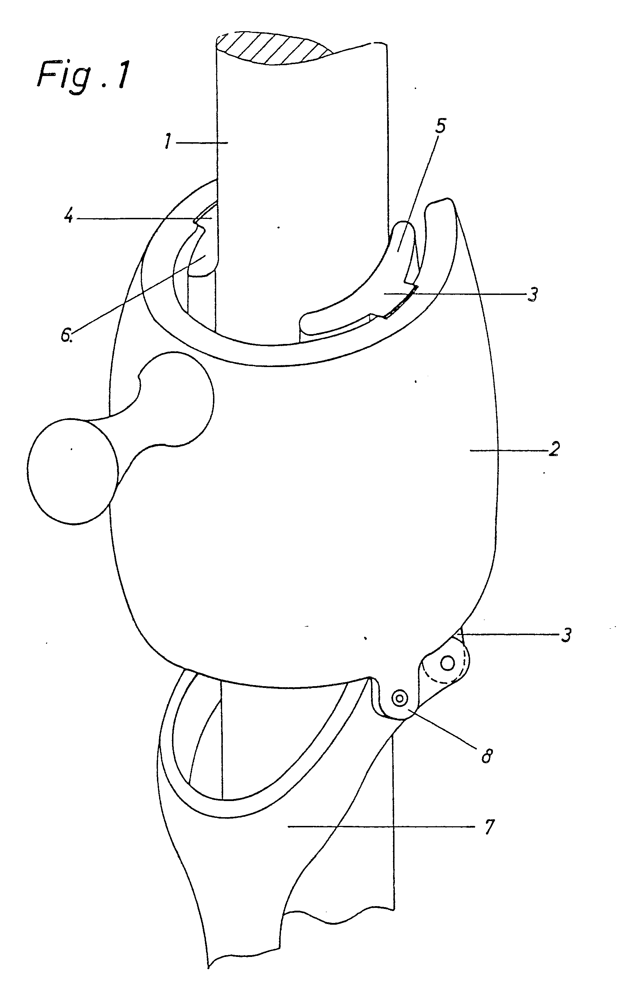

Die Manschette 2 nach Fig. 1, die axial oder radial auf den Mast 1 aufschiebbar ist, ist mit einer sektorartigen Aussparung versehen. Auf ihrer Innenfläche ist die Manschette 2 an gegenüberliegenden Seiten mit Nuten mit in axialer Richtung des Mastes keilförmig abgeschrägten Bodenflächen versehen, in denen gegensinnig abgeschrägte keilförmige Klemmelemente 3, 4 geführt sind, die auf ihren einander zugewandten Seiten zylinderschalenförmige Klemmbacken 5, 6 tragen, die klemmend an dem Mast 1 angreifen. Zum Aufbringen der Klemmspannung sind die Klemmelemente 3, 4 relativ zu der Manschette 2 in axialer Richtung des Mastes 1 durch einen Doppelgelenkhebel 7 verschiebbar. Der Doppelgelenkhebel 7 faßt den Mast 1 gabelförmig ein und ist mit seinen Schenkeln über Gelenkbolzen auf lappenartigen Fortsätzen 8 der Manschette 2 schwekbar gelagert. Die freien Enden der Schenkel des Doppelgelenkhebels 7 sind in der aus Fig. 1 ersichtlichen Weise mit den Klemmelementen gelenkig verbunden.

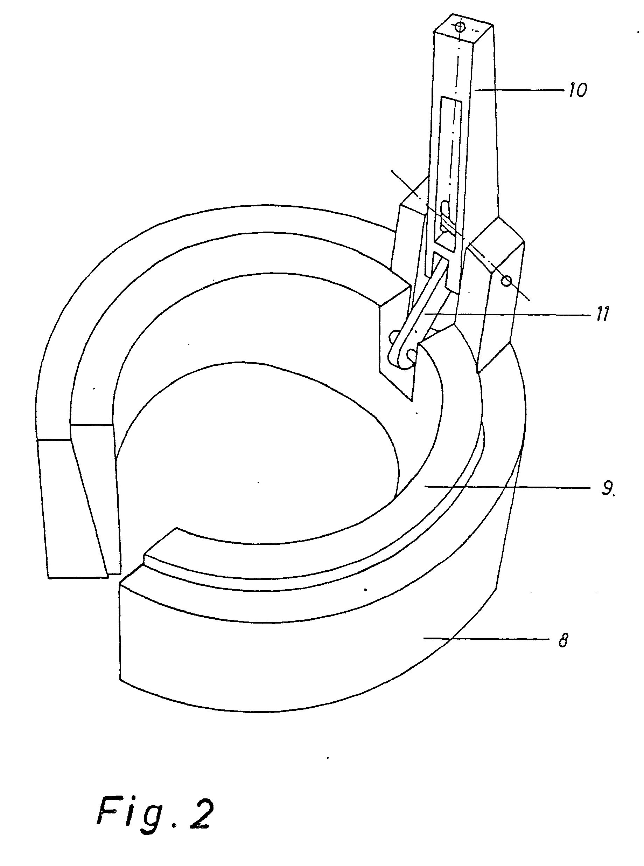

Die Manschette 8 nach Fig. 2 trägt ein ringförmiges Klemmelement 9. Beide sind mit einer sektorartigen Aussparung versehen. Weiter sind beide aufeinander durch gegensinnig abgeschägte Kegelflächen abgestützt.

Zum Bewegen des Klemmelementes 9 ist auf der Manschette 8 ein Spannhebel 10 schwekbar gelagert, der gelenkig mit einem an dem Klemmelement angelenkten Spannhebel 11 verbunden ist.

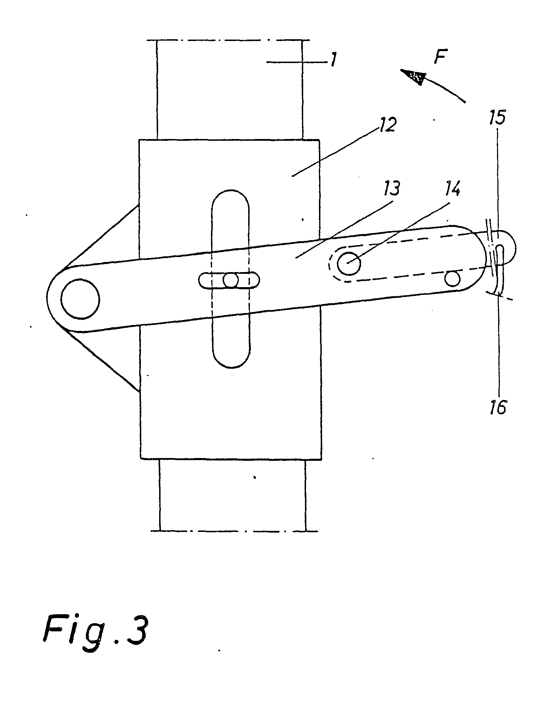

Aus Fig. 3 ist eine Manschette 12 mit einem gelenkig mit dieser verbundenen Spannhebel 13 ersichtlich, mit dem um den Gelenkbolzen 14 schwenkbar der Verlängerungshebel 15 verbunden ist. Im gespannten Zustand ist der Verlängerungshebel 15 in Richtung des Pfeils F gegen den Mast 1 klappbar. And em Ende des Hebels 15 ist die Startschot 16 befestigt.

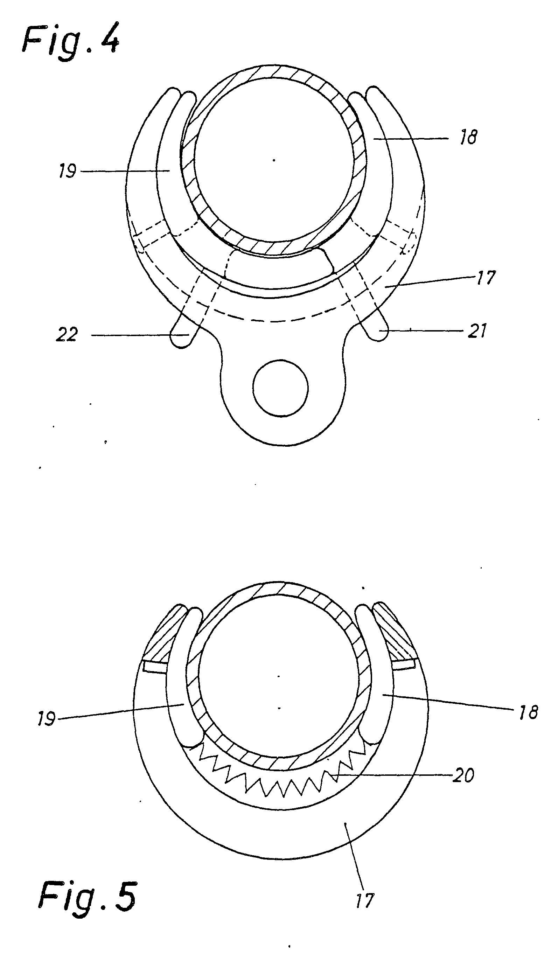

Bei der Ausführungsform nach den Fig. 4 und 5 ist ebenfalls eine ringförmige, mit einer Aussparung versehene Manschette 17 vorgesehen, in der in Umfangsrichtung verschiebliche Klemmkeile 18, 19 geführt sind. Die Klemmkeile 18, 19 können durch besondere Spanneinrichtungen oder eine Spannfeder 20 in Spannrichtung verschieblich sein. Zum Lösen der Klemmverbindung sind die Klemmkeile 18, 19 mit die Manschette in Schlitzen durchsetzenden Nocken 21, 22 versehen.

## Patentansprüche

1. Manschette zum Befestigen eines Gabelbaums an einem Mast eines Segelbretts, wobei die Manchette auf den Mast aufschiebbar und mittels eines Klemmelementes festlegbar ist, dadurch gekennzeichnet, daß die Manchette (2, 8, 12, 17) einen Innendurchmesser aufweist, der größer als der Außendurchmesser des Mastes (1) ist, daß das Klemmelement (4, 5, 9, 18, 19) keilförmig ausgebildet und in dem Ringraum zwischen der Manschette und dem Mast verschiebbar gehalten ist und daß zum Verschieben des Klemmelementes eine Spanneinrichtung vorgesehen ist.

2. Manschette nach Anspruch 1, dadurch gekennzeichnet, daß das keilförmige Klemmelement (4, 5, 9) in axialer Richtung zum Mast (1) verschiebbar ist.

3. Vorrichtung nach Anspruch 1 oder 2, dadurch gekennzeichnet, daß die Klemmelemente aus zwei an einander gegenüberliegenden Seiten des Mastes (1) angreifenden Klemmkeilen (4, 5) bestehen.

4. Vorrichtung nach einem der Ansprüche 1 bis 3, dadurch gekennzeichnet, daß sich die Klemmkeile auf gegensinnig abgeschrägten Wänden des Halteteils abstützen.

5. Vorrichtung nach einem der Ansprüche 1 bis 4, dadurch gekennzeichnet, daß die Klemmkeile (4, 5) in Nuten der Innenwandung des Halteteils (2) geführt sind.

6. Vorrichtung nach einem der Ansprüche 1 bis 5, dadurch gekennzeichnet, daß die Klemmkeile (3, 4) auf ihren dem Mast (1) zugewandten Seiten zylinderschaltenförmige Klemmbacken (5, 6) tragen.

7. Vorrichtung nach Anspruch 1 oder 2, dadurch gekennzeichnet, daß das Klemmelement aus einem Ring (9) mit keilförmigem Profil besteht.

8. Vorrichtung nach einem der Ansprüche 1 bis 7, dadurch gekennzeichnet, daß das ringförmige Halteteil mit einer Aussparung versehen ist.

9. Vorrichtung nach Anspruch 7, dadurch gekennzeichnet, daß das ringförmige Halteteil und das ringförmige Klemmelement mit Aussparungen versehen sind.

10. Manschette nach einem der Ansprüche 1 bis 9, dadurch gekennzeichnet, daß die Spanneinrichtung aus einem zweiarmigen Hebel, einem Kniehebel oder einem Exzenter besteht.

11. Vorrichtung nach einem der Ansprüche 1 bis 10, dadurch gekennzeichnet, daß an dem Spannhebel (13) ein entgegen der Spannrichtung schwenkbarer Verlängerungshebel (15) begrenzt schwenkbar angelenkt ist, an dem die Startschot (16) befestigt ist.

12. Vorrichtung nach Anspruch 1, dadurch gekennzeichnet, daß in dem Ringspalt in Umfangsrichtung verschiebliche gekrümmte Klemmkeile (18, 19) gehaltert sind.

13. Manschette nach Anspruch 12, dadurch gekennzeichnet, daß sie Nuten aufweist, in denen die Klemmkeile (18, 19) geführt sind.

14. Manschette nach Anspruch 12 oder 13, dadurch gekennzeichnet, daß sie mit einer Aussparung versehen ist.

15. Manschette nach einem der Ansprüche 12 bis 14, dadurch gekennzeichnet, daß die Klemmkeile (18, 19) in Klemmrichtung federbelastet sind.

16. Manschette nach einem der Ansprüche 12 bis 15, dadurch gekennzeichnet, daß die Klemmkeile (18, 19) mit die Manschette (17) durchsetzenden Nocken (21, 22) zum Lösen der Verspannung versehen sind.

## Revendications

1. Manchette pour la fixation d'un wishbone à un mât d'une planche à voile, la manchette pouvant être glissée sur le mât et fixée à l'aide d'un élément de serrage, caractérisée en ce que la manchette (2, 8, 12, 17) présente un diamètre intérieur qui est supérieur au diamètre extérieur du mât (1), que l'élément de serrage (4, 5, 9, 18, 19) est de forme conique et est tenu dans l'espace annulaire entre la manchette et le mât de manière à pouvoir être déplacé, et qu'un dispositif de tension est prévu pur le déplacement de l'élément de serrage.

2. Manchette selon la revendication 1, caractérisée en ce que l'élément de serrage en forme conique (4, 5, 9) peut être déplacé en direction axiale par rapport au mât (1).

3. Dispositif selon les revendications 1 ou 2, caractérisé en ce que les éléments de serrage consistent en coins de serrage (4, 5) s'attaquant à deux côtés du mât (1) se faisant face.

4. Dispositif selon l'une des revendications 1 à 3, caractérisé en ce que les coins de serrage s'appuient sur des parois biseutées en sens contraire de la partie de fixation.

5. Dispositif selon l'une des revendications 1 à 4, caractérisé en ce que les coins de serrage (4, 5) sont guidés dans des rainures de la paroi intérieure de la partie de fixation (2).

6. Dispositif selon l'une des revendications 1 à 5, caractérisé en ce que les coins de serrage (3, 4) portent sur leur côté dirigé vers le mât (1) des mâchoires de serrage (5, 6) en forme de coques cylindriques.

7. Dispositif selon les revendications 1 ou 2, caractérisé en ce que l'élément de serrage consiste en un anneau (9) avec un profil conique.

8. Dispositif selon l'une des revendications 1 à 7, caractérisé en ce que la partie de fixation annulaire est pourvue d'une échancrure.

9. Dispositif selon la revendication 7, caractérisé en ce que la partie de fixation annulaire et l'élément de serrage annulaire sont pourvus d'échancrures.

10. Manchette selon l'une des revendications 1 à 9, caractérisée en ce que le dispositif de serrage consiste en un levier à deux bras, un levier coudé ou un excentrique.

11. Dispositif selon l'une des revendications 1 à 10, caractérisé en ce que le levier de serrage (13) est articulé à un levier de prolongement (15) pivotant sur une distance limitée en direction opposée à la direction de serrage, levier de prolongement auquel le tire-veille (16) est fixé.

12. Dispositif selon la revendication 1, caractérisé en ce que dans la fente annulaire, le coin de serrage coudé (18, 19) est fixé de manière à pouvoir être déplacé en direction périphérique.

13. Manchette selon la revendication 12, caractérisée en ce qu'elle présente des rainures dans lesquelles les coins de serrage (18, 19) sont guidés.

14. Manchette selon les revendications 12 ou 13, caractérisée en ce qu'elle est pouvue d'une échancrure.

15. Manchette selon l'une des revendications 12 à 14, caractérisée en ce que les coins de serrage (18, 19) sont soumis à la force d'un ressort en direction du serrage.

16. Manchette selon l'une des revendications 12 à 15, caractérisée en ce que les coins de serrage (18, 19) sont pourvus de cames (21, 22) pour dégrager le serrage.

**Claims**

1. Sleeve for attaching a wishbone to the mast of a sailboard in which the sleeve can be slipped onto the mast and fastened by means of a clamping device, characterised in that the internal diameter of the sleeve (2, 8, 12, 17) is greater than the external diameter of the mast (1), the clamping device (4, 5, 9, 18, 19) is tapered and mounted in a sliding mount in the annular space between the sleeve and the mast, and that a tensioning device is provided to move the clamping device.

2. Sleeve according to claim 1, characterised in that the tapered clamping device (4, 5, 9) can slide in an axial direction relative to the mast (1).

3. Sleeve according to claim 1 or 2, characterised in that the clamping devices consist of two clamp keys (4, 5) acting on opposite sides of the mast (1).

4. Sleeve according to one of claims 1 to 3, characterised in that the clamp keys rest on the walls of the sleeve which are bevelled in opposed directions.

5. Sleeve according to one of claims 1 to 4, characterised in that the clamp keys (4, 5) are tracked in slots in the inner wall of the retaining element (2).

6. Sleeve according to one of claims 1 to 5, characterised in that the clamp keys (3, 4) are provided with cylindrical-shell-shaped clamping jaws (5, 6) on their sides facing the mast (1).

7. Sleeve according to claim 1 or 2, characterised in that the clamp device consists of a ring (9) of tapered section.

8. Sleeve according to one of claims 1 to 7, characterised in that the annular retaining element is provided with a recess.

9. Sleeve according to claim 7, characterised in that the annular retaining element and the annular clamping device are provided with recesses.

10. Sleeve according to one of claims 1 to 9, characterised in that the tensioning device consists of a twin-armed lever, an articulated lever or an eccentric.

11. Sleeve according to one of claims 1 to 10, characterised in that a lengthening lever (15), to which the uphaul rope (16) is attached, is mounted on the tension lever (13) with limited pivotability such that it is pivotable against the tensioning direction.

12. Sleeve according to claim 1, characterised in that curved clamp keys (18, 19) movable in the peripheral direction are mounted in the annular space.

13. Sleeve according to claim 12, characterised in that it has slots in which the clamp keys (18, 19) are tracked.

14. Sleeve according to claim 12 or 13, characterised in that it is provided with a recess.

15. Sleeve according to one of claims 12 to 14, characterised in that the clamp keys (18, 19) are spring-loaded in the direction of clamping.

16. Sleeve according to one of claims 12 to 15, characterised in that the keys (18, 19) are provided with cams (21, 22) which pass through the sleeve (17) to loosen the tension.

Fig .1

Fig.2

Fig.3

*Fig.4*

*Fig.5*